# EUROPÄISCHE PATENTANMELDUNG

(11) **EP 1 195 616 A2**
(43) Veröffentlichungstag der Anmeldung: **10.04.2002**
(21) Anmeldenummer: 01122985.3
(22) Anmeldetag: 26.09.2001
(51) Int. Cl.: G01S 7/295, G01S 7/285

(54) **Skalierbares Radar-Signalprozessorsystem**

(30) Priorität: 09.10.2000 DE 10050304
(71) Anmelder: EADS Deutschland GmbH, 81663 München (DE)
(72) Erfinder: Gäntgen, Ralph, 89614 Öpfingen (DE)
(74) Vertreter: Meel, Thomas

(57) **Zusammenfassung**

Es wird ein skalierbareres Radar-Signalprozessorsystem zur Verarbeitung von Daten zwischen einer Datenquelle und einer Datensenke vorgeschlagen, bei dem über ein Bussystem an wenigstens einem DSP(=Digitaler Signal-Prozessor)-Knoten eine entsprechend Anzahl von Standard-DSP-Karten sowie Komponenten zur Nutzdatenlieferung und zur Nutzdatenabholung parallel verbunden sind, wobei jeder DSP-Knoten mit der gleichen Software betrieben wird und alle Signalverarbeitungsalgorithmen auf einem dem jeweiligen Knoten zugewiesenen Nutzdatenanteil ausgeführt werden.

## Beschreibung

Die Erfindung betrifft ein skalierbares Radar-Signalprozessorsystem nach dem Oberbegriff von Anspruch 1.

Die Entwicklung eines Radar-Signalprozessors war bisher mit erheblichen Kosten verbunden, da nur selten und dann in geringem Umfang eine projektübergreifende Verwendung von Produkten möglich war. Auch der Einsatz von käuflichen, universell verwendbaren DSP-Karten konnte bisher die Entstehung von projektspezifischen, nicht universell verwendbaren Anteilen nicht verhindern, da die eingesetzten DSP's aufgrund ihrer noch geringen Rechenleistung komplizierte Systemarchitekturen erforderten. Ebenso ließ sich dadurch der Aufwand im Bereich der Software-Entwicklung nicht verringern.

Es ist das Ziel der Erfindung, ein Radar-Signalprozessorsystem zu schaffen, das möglichst weitgehend aus handelsüblichen Serienkomponenten besteht und das so aufgebaut ist, daß es an unterschiedliche Anforderungen sowohl hardwaremäßig als auch softwaremäßig mit wenig Aufwand anpaßbar ist. Außerdem soll eine möglichst einfache Möglichkeit angegeben werden, die entsprechende Software mit vertretbarem Aufwand auch für kleine Geräteauflagen zu entwickeln und zu erproben.

Dies wird gemäß der Erfindung durch die im kennzeichnenden Teil des Hauptanspruchs aufgeführten Merkmale erreicht.

Einzelheiten der Erfindung ergeben sich aus den Unteransprüchen und der Beschreibung, in der anhand der Zeichnung ein Ausführungsbeispiel erörtert wird. Es zeigen
- Fig. 1: schematisch den Aufbau einer erfindungsgemäßen Anordnung,
- Fig.2: schematisch die in einem verwendeten handelsüblichen Bauteil benutzten Teile

Bisher war der Signalprozessor in neu anlaufenden Projekten in der Regel mit hohem Aufwand an Neuentwicklung, zumindest aber mit Nachentwicklung in nicht unbeträchtlichen Größenordnungen verbunden. Auch bisherige, auf Digitalen Signalprozessoren (DSP) basierende Konzepte erfordern nicht zuletzt aufgrund von Sparmaßnahmen zusätzlichen Entwicklungsaufwand, um sie für andere Projekte verwendbar zu machen.

Im Bereich der Hardware-Entwicklung lassen sich Kosten durch Verwendung von universell einsetzbaren COTS-Produkten ("Commercial Off-The-Shelf") aus Massenmärkten wie bspw. der Telekommunikation reduzieren. Trotzdem führten die hohen Anforderungen der Radar-Signalverarbeitung bisher wie erwähnt zu projektspezifischen Architekturen, die generell nur bedingt in anderen Projekten einsetzbar sind.

Der Aufwand im Bereich der Betriebssoftware-Erstellung stellt den dominierenden Anteil an der Gesamtentwicklung dar. Wechselnde Hardware-Architekturen und DSP-Plattformen sowie immer neue Technologiegenerationen erfordern bei jedem neuen Projekt erheblichen Programmieraufwand, obwohl die zugrundeliegenden Algorithmen (Pulskompression, Dopplerfilterung, CFAR et al.) weitestgehend identisch bleiben. Die projektspezifische Implementierung der Software erschwert zusätzlich ihre Änderbarkeit, da nachträgliche Änderungen und Verbesserungen immer die Kenntnis der gesamten Software voraussetzen, diese Kenntnis aber bei der Fülle der unterschiedlichen Implementierungen nur beim ursprünglichen Entwickler in vollem Umfang vorhanden sein kann.

Weiterhin liegt vor der eigentlichen Implementierung der Software die Simulation der Algorithmen und der zugehörigen Parameter sowie deren Optimierung und Anpassung an die Gegebenheiten des jeweiligen Projektes. Eine solche Simulation entspricht in ihrem Kern in der Regel strukturell und funktional der eigentlichen Betriebssoftware. Trotzdem müssen hier bestimmte Anteile der Software zweimal codiert werden, da Simulation und Betriebssoftware auf unterschiedlichen Plattformen und Sprachen, beispielsweise "MatLab" und "C" laufen.

Die Signalprozessor-Architektur, als deren Basiskomponente Digitale Signalprozessoren dienen sollen, besteht prinzipiell aus den zwei Hauptkomponenten "Datentransport" und "Datenverarbeitung".

Die Architektur soll sich entsprechend der gestellten Aufgabe auf unterschiedliche DSP-Hardware-Plattformen abbilden lassen, unabhängig von der eingesetzten Technologie, vom verwendeten DSP-Typ und vom verwendeten Board-Typ. Insgesamt soll dadurch eine gewisse Unabhängigkeit vom Kartenhersteller erreicht werden. Zudem sollen die DSP-Karten als COTS-Produkt käuflich am freien Markt erhältlich sein, um eigene Entwicklungskosten zu vermeiden.

Dies bedeutet, dass als Hauptkomponenten zweckmäßig nur solche Elemente zum Einsatz kommen, die auf der Mehrzahl der am Markt befindlichen DSP-Karten zu finden sind, also standardisierte Bussysteme und DSP-Knoten ohne herstellerspezifische Erweiterungen.

Um Systeme beliebiger Leistungsfähigkeit mit dieser Architektur aufbauen zu können, muss die Anzahl an DSP's, die ja letztendlich die Leistungsfähigkeit des Systems bestimmt, variabel sein. Am einfachsten ist dies zu verwirklichen, wenn man jeden DSP als gleichberechtigt im System betrachtet, ihm also die gleiche Priorität zuweist.

Diese Gleichstellung aller DSP's bedingt, dass alle Knoten als gleichberechtigte Teilnehmer mit dem - evtl. virtuellen - Bussystem in Verbindung stehen, das alleine für den Zu- und Abtransport der Nutzdaten zuständig ist. Hieraus folgt auch, das die Verbindungen zum Radarkopf wie auch zu nachfolgenden Verarbeitungsstufen über dieses Bussystem hergestellt werden.

Ebenso folgt aus der genannten Gleichstellung der Prozessoren die Übertragung der gleichen Aufgabe und damit - zwangsweise in einem Radar-Signalprozessor - die Abarbeitung aller enthaltenen Algorithmen an jedem DSP, was im Gegensatz zur bisherigen Praxis ist. Der Mehrbedarf an Rechenzeit muss dabei durch die Mehrzahl der Prozessoren kompensiert werden.

Ein Werkzeug zur automatischen Softwareerstellung muss bei seiner Ausführung diverse Eigenschaften der gewünschten Betriebssoftware berücksichtigen. Dies sind vor allem die Architektur des Zielsystems sowie die Codierungssprache und deren Umfang.

Aus der Anforderung der Skalierbarkeit ergibt sich bereits, dass jeder DSP alle Algorithmen abarbeiten muss. Folglich kann identische Software auf allen DSP's ablaufen, und die automatische Software-Generierung kann sich auf Betriebssoftware eines einzigen Prozessors beschränken. Es müssen also keine Architekturvorgaben berücksichtigt werden.

Weiterhin können bei der Software-Generierung mit einem Werkzeug, das für Zielsysteme unterschiedlicher Hersteller geeignet sein soll, keine herstellerspezifischen Zielcode-Besonderheiten wie zum Beispiel Betriebssysteme oder über ein absolut notwendiges Minimalmaß hinausgehende Bibliotheksfunktionen berücksichtigt werden. Lediglich die von den meisten Herstellern in ähnlicher Form mitgelieferten Unterstützungspakete (Software Development Kits, Toolboxen oder Board Support Package genannt) zur Durchführung elementarer Funktionen wie Initialisierung oder Kommunikation können zum Einsatz kommen, müssen dann aber bei Portierung auf eine andere DSP-Kartenfamilie von Hand geändert werden.

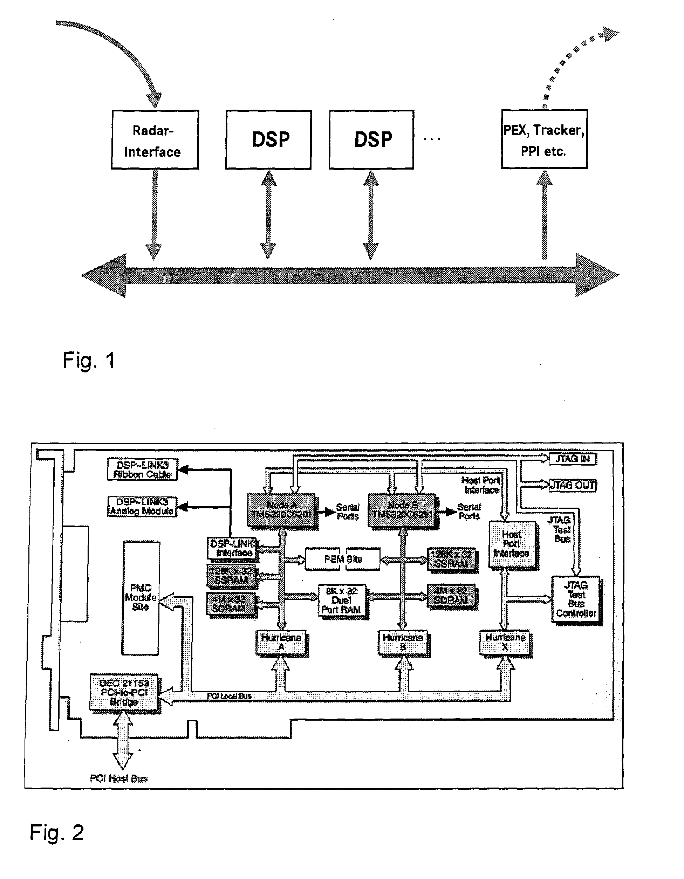

Die genannten Anforderungen an die Eigenschaften führen letztendlich zu einem System, das aus einem Bussystem besteht, an dem eine variable Anzahl an DSP-Knoten sowie Komponenten zur Nutzdatenanlieferung sowie zur Nutzdatenabholung parallel angeschlossen sind. Auf jedem DSP-Knoten läuft Software, die alle Signalverarbeitungsalgorithmen auf einem dem Knoten zugewiesenen Nutzdatenanteil ausführt. Figur 1 zeigt die Parallelarchitektur eines solchen Systems gemäß der Erfindung im Überblick.

Um eine solche erfindungsgemäße Architektur zu realisieren, benötigt man ein geeignetes Bussystem, mindestens einen, besser mehrere DSP-Knoten, eine Nutzdatenquelle und eine Nutzdatensenke.

Im Folgenden wird ein Ausführungsbeispiel für die Erfindung beschrieben.

Als geeignetes Bussystem wurde der weit verbreitet PCI-Bus ausgewählt, der Raten bis 33 MWorte/s × 32 bit bzw. 133 MByte/s übertragen kann. Komponenten für dieses Bussystem sind seit seinem Einsatz in Standard-PCs zahlreich am Markt erhältlich und evtl. notwendig werdende Eigenentwicklungen lassen sich mit den ebenfalls am Markt verfügbaren Chipsätzen vereinfacht durchführen. Weiterhin bietet der PCI-Standard die Erweiterung Compact-PCI (cPCI), die bei gleichen elektrischen Eigenschaften für Radar-Signalprozessoren geeignetere mechanische Eigenschaften (robustere Steckverbinder, Doppel-Europaformat) bietet.

Der oder die DSP-Knoten sollen - neben ihrer Verfügbarkeit für den PCI-Bus - einen DSP aus der aktuellen Generation beinhalten. Die Wahl für das Ausführungsbeispiel fiel auf den TMS320C6701 von Texas Instruments, ein Floating-Point-Signalprozessor, der seit dem Jahre 1999 in Stückzahlen verfügbar ist. Die verwendete DSP-Karte des Hersteller Spectrum vom Typ Daytona67 bietet zwei Prozessorknoten mit je einem TMS320C6701 bei 167MHz, 2 MByte + 128 kByte Speicher und lokalem PCI-Bus, der auch einen PMC-Steckplatz versorgt, auf einer PC-Einsteckkarte. Weitere Features der Karte sollten im Hinblick auf die generische Architektur, die mit ihr realisiert werden soll, nicht verwendet werden.

Figur 2 zeigt das Blockschaltbild dieser DSP-Karte, sowie entsprechend markiert die zum Einsatz kommenden Komponenten , nämlich das Bussystem und die DSP-Knoten. Genauere Angaben zur verwendeten Karte sind in
[1] Daytona Dual 'C6x PCI Board - Technical Reference, Doc. No. 500-00383, Rev. 2.00, Spectrum Signal Processing Inc., May 1999.
zu finden.

Wie bereits erläutert, hat jeder DSP auf der Karte die gleichen Algorithmen abzuarbeiten. Folglich müssen die einlaufenden Nutzdaten auf die verschiedenen DSP's verteilt werden. Im Falle von MTI-ModKit bietet sich eine Verteilung in Burst-Paketen an, da hier alle Algorithmen innerhalb eines Bursts abgearbeitet werden können. Eine Verarbeitung über mehrere Bursts hinweg findet lediglich bei der Bodenclutterkarte bei starken Windlaständerungen statt. Dieser spezielle Fall soll hier unberücksichtigt bleiben, zumal geeignete algorithmische Gegenmaßnahmen möglich sind.

Der notwendige Arbitrierungsmechanismus beruht auf dem Grundsatz, Datenpakete - hier Bursts - reihum an die vorhandenen DSP's zu verteilen. Bei gleicher Paketgröße und ausreichender Anzahl an DSP's erhält ein DSP erst wieder neue Daten, wenn er sein vorheriges Paket abgearbeitet hat. Diese Annahme ist möglich, da die Verarbeitungsdauer bei den meisten eingesetzten Algorithmen determiniert und konstant ist.

Zur Abarbeitung der Algorithmen werden den DSP-Knoten zunächst die vollständigen Daten eines Radar-Bursts und darauf ein Statuswort, das die abgeschlossene Datenübertragung signalisiert, übertragen. Wenn die Ergebnisdaten bereit stehen, setzt der DSP seinerseits ein Statuswort, das seine Bereitschaft, Daten abzuliefern und neue Daten zu empfangen, signalisiert.

Ein vollständiger Verarbeitungszyklus eines einzelnen DSP-Knotens läuft also folgendermaßen ab:
- Übermittlung eines Datenpaketes von der Datenquelle zum DSP-Knoten
- Setzen des Eingangsstatuswortes
- Berechnen der Ergebnisdaten
- Setzen des Ausgangsstatuswortes
- Übermittlung der Ergebnisdaten an die Datensenke

Alle vorhanden DSP-Knoten arbeiten diesen Zyklus kanonartig verschachtelt ab, so dass die resultierenden Ergebnisdaten in gleicher zeitlicher Reihenfolge zur Verfügung stehen und die Last auf dem Kommunikationsbus annähernd konstant ist.

Folgende Abwandlungen des aufgezeigten Arbitrierungsmechanismus sind müglich und wurden in Grundzügen ebenfalls erprobt:

Ein DSP-Knoten erhält mehrere Bursts in einem Datenübertragungsvorgang; das führt zu weniger Overhead, aber höherer Latenzzeit.

Die Verwendung von unterschiedlich großen Pakete mit unterschiedlicher resultierender Rechenzeit ist im Anwendungsfall Multi-Mode-Radar zweckmäßig; erfordert aber dann zusätzliche Übertragung von Verarbeitungsparametern und erweiterten Arbitrierungsmechanismen sowie "Reserve-DSPs".

Eine erhöhte Anzahl von DSP-Knoten führt zu entsprechender Redundanz, die für bestimmte Anwendungen teilweise gewünscht wird.

Der verwendete PC, in den die DSP-Karte eingebaut wurde, im folgenden auch Host genannt, übernimmt, wie bereits erwähnt, neben Steuerungsaufgaben die Simulation der Datenquelle und der Datensenke. Diese Aufgaben wurden im Microsoft Developer Studio mit Visual C und Hilfsfunktionen aus dem Daytona WinNT Host Software Development Kit von Spectrum gemäß
[2] Daytona/Barcelona 'C6x PCI Board - Windows NT Programming Guide, Doc. No. 500-00384, Rev. 1.10, Spectrum Signal Processing Inc., May 1999
in die Host-Software umgesetzt.

Folgende Aktionen werden von der Software ausgeführt:
Simulierte Radardaten berechnen
Initialisierung des DSP-Subsystems und der Kommunikation zwischen Host und DSP-Knoten
DSP- Knoten mit Betriebssoftware laden
   ---- Endlosschleife (wird nur im Fehlerfall verlassen):
      ---- DSP-Knoten-Schleife:
         Ergebnisse der letzten Berechnung - falls vorhanden - aus Pufferspeicher abholen
         Radardaten in DSP-Speicher übertragen
         Berechnung starten
      ---- Ende der DSP-Knoten-Schleife
   ---- Ende der Endlosschleife
Freigabe der Ressourcen des DSP-Subsystems

Darüber hinaus wurde zu Integrationszwecken eine Zeitmessung sowie die Möglichkeit, Statusmeldungen der einzelnen DSP-Knoten zu übermitteln und anzuzeigen, in die minimal erforderliche Betriebssoftware integriert.

Dabei muß berücksichtigt werden, dass die Simulation von Quelle und Senke durch ein einziges Programm unter Umständen verfälschend auf die Messergebnisse wirken kann. Um dies zu vermeiden, kann man Quelle und Senke auch in getrennt und unabhängig voneinander ablaufenden Programmen simulieren. Allerdings ist hierbei immer noch der Einfluss des Betriebssystem Windows NT zu berücksichtigen, das seinerseits auch verfälschend wirken könnte. Im realen Betrieb treten diese Probleme aber nicht auf, da zumindest die Datenquelle wegen der anfallenden hohen Datenrate als getrennter Busteilnehmer realisiert wird.

Die Betriebssoftware der DSP-Knoten ist in ihrer Struktur wesentlich einfacher, da die Übertragung der Radardaten sowie die gesamte Ablaufsteuerung vom Host erledigt wird. Sie wurde im Code Composer mit ANSI-C und Hilfsfunktionen aus dem Daytona C6x DSP Software Development Kit von Spectrum gemäß [1] erstellt und mit den Code Generation Tools von Texas Instruments in ausführbaren Code umgesetzt.

Folgende Aktionen werden von der Software ausgeführt:

Initialisierung der DSP-Hardware
---- Endlosschleife:
   Warten auf neue Radardaten
   Signalverarbeitungsalgorithmen durchführen
   Ergebnisdaten an den Host übermitteln
---- Ende der Endlosschleife

Auch hier wurde zu Integrationszwecken eine weitere Zeitmessung sowie die Möglichkeit, DSP-Statusmeldungen zu übermitteln, in die minimal erforderliche Betriebssoftware integriert.

Als problematisch erwies sich, den vorhandenen, dem Host zugänglichen Speicher so aufzuteilen, dass einerseits ein- und ausgehende Daten gleichzeitig, d.h. in unterschiedlichen Speicherbereichen gehalten werden können - dies ermöglicht quasi-gleichzeitigen Transport zum und vom DSP-Knoten, die Koordination übernimmt hierbei der Arbitrierungsmechanismus des PCI-Bus -, andererseits die Anzahl der Speicherzugriffe der DSP-Software durch zusätzliche Kopieraktionen nicht übermäßig ansteigen zu lassen.

Um die Leistungsfähigkeit des DSP-Systems beurteilen zu können, wurde zur Vermeidung von Messfehlern an zwei Stellen die erforderliche Rechenzeit ermittelt. Einerseits wurde in der DSP-Software die Berechnungszeit für einen einzelnen Burst gemessen, andererseits erfolgte eine ähnliche Messung in der Host-Software. Der letztere Wert beinhaltete zusätzlich die Datenübertragungszeiten und war deshalb etwas höher.

Als Vergleichsmaßstab für die gemessenen Werte diente die Dauer eines Bursts. Der Quotient beider Werte ergibt in erster Näherung die erforderliche Anzahl DSP's zur Realisierung der jeweiligen Algorithmen-Kombination.

Zur Darstellung der Leistungsfähigkeit des erfindungsgemäß aufgebauten Systems wurden neben der ursprünglichen Konfiguration des MTI-ModKit auch einige andere Konfigurationen, teils realistischer, teils akademischer Natur, erprobt. In der folgenden Tabelle sind die einzelnen Algorithmenkombinationen, die erforderlichen Rechenzeiten, sowie die zur echtzeitlichen Realisierung erforderliche Anzahl TMS320C6701 aufgeführt:

| **Konfiguration** | **Algorithmik** | **Rechenzeiten** | **Anzahl DSP's** |
|---|---|---|---|
| **Originalzustand** | 2 komplexe Filter OS-CFAR 2544 EZ GCM-Auflösung 180 | 90/95 ms | 3 |
| **vereinfacht** | 2 reelle Filter CA-CFAR 2544 EZ GCM-Auflösung 180 | 31/36 ms | 1 |
| **Minimalsystem** | 2 reelle Filter CA-CFAR 1000 EZ GCM-Auflösung 180 | 12/17 ms | 1 |
| **sinnvoll vereinfacht** | 2 reelle Filter CAGO-CFAR 1000 EZ GCM-Auflösung 180 | 13/18 ms | 1 |
| **System A** | 8 komplexe Filter CAGO-CFAR 1000 EZ GCM-Auflösung 180 | 76/82 ms | 2 |
| **komplexes System A** | 8 komplexe Filter OS-CFAR 1000 EZ GCM-Auflösung 512 | 137/143 ms | 4 |

Anmerkungen zur Tabelle:
- EZ: Entfernungszellen
- Die GCM-Auflösung "512" beinhaltet die Mittelwertbildung aus benachbarten GCM-Einträgen
- Die Verwendung der reduzierten Anzahl an Entfernungszellen ist wegen 2,5-facher Überabtastung zulässig.

### Abkürzungen und Begriffe

- ANSI: American National Standards Institute
- CFAR: Constant False Alarm Rate
- COTS: Commercial Off-The-Shelf
- cPCI: Compact PCI
- DSP: Digitaler Signalprozessor
- GCM: Ground Clutter Map
- IV: Informationsverarbeitung
- MTI: Moving Target Indicator
- MTD: Moving Target Detector
- PCI: Peripheral Components Interconnect
- PMC: PCI Mezzanine Connector

## Patentansprüche

1. Skalierbareres Radar-Signalprozessorsystem zur Verarbeitung von Daten zwischen einer Datenquelle und einer Datensenke
**dadurch gekennzeichnet, daß**
- über ein Bussystem eine entsprechende Anzahl von Standard-DSP-Karten mit jeweils mehreren DSP-Knoten sowie Komponenten zur Nutzdatenlieferung und zur Nutzdatenabholung parallel verbunden sind,
- daß jeder DSP-Knoten mit der gleichen Software betrieben wird und alle Signalverarbeitungsalgorithmen auf einem dem jeweiligen Knoten zugewiesenen Nutzdatenanteil ausgeführt werden.

2. Radar-Signalprozessorsystem nach Anspruch 1, **dadurch gekennzeichnet, daß** ein standardisiertes-Bussystem verwendet wird.

3. Radar- Signalprozessorsystem nach Anspruch 2, **dadurch gekennzeichnet, daß** die Nutzdaten auf Pakete verteilt werden, die reihum an die DSP's gesandt und von diesen nach Abarbeitung weitergeleitet werden.

4. Radar- Signalprozessorsystem nach Anspruch 3, **dadurch gekennzeichnet, daß** ein Verarbeitungszyklus aus folgenden Schritten besteht:
- Übermittlung eines Datenpaketes von der Datenquelle zum DSP-Knoten,
- Setzen des Eingangsstatuswortes,
- Berechnen der Ergebnisdaten,
- Setzen des Ausgangsstatuswortes und
- Übermittlung der Ergebnisdaten an die Datensenke

5. Radar-Signalprozessorsystem nach Anspruch 3, **dadurch gekennzeichnet, daß** zur Softwareentwicklung das Signalprozessorsystem in einem Standard-PC integriert wird, der gleichzeitig sowohl die Simulation von Datenquelle und Datensenke als auch die Messung von Werten zu Optimierungszwecken vornimmt.
